# EUROPEAN PATENT APPLICATION

(11) **EP 2 605 575 A1**
(43) Date of publication of application: **19.06.2013**
(21) Application number: 11783064.6
(22) Date of filing: 02.06.2011
(51) Int. Cl.: H04W 24/10

(54) **HANDOVER METHOD, PRIVATE NETWORK USER EQUIPMENT, ACCESS NETWORK EQUIPMENT, AND SYSTEM**

(30) Priority: 03.09.2010 CN 201010273370
(71) Applicant: Huawei Technologies Co., Ltd., Shenzhen, Guangdong 518129 (CN)
(72) Inventor: LI, Shuang, Shenzhen Guangdong 518129 (CN)
(74) Representative: Maiwald Patentanwalts GmbH
(86) International application number: PCT/CN2011/075175
(87) International publication number: WO 2011/144147

(57) **Abstract**

The embodiments of the present invention disclose a handover method and correspondingly provide a dedicated network user equipment, an access network device, and a system. The method provided in an embodiment of the present invention includes: receiving, by a dedicated network user equipment, a measurement control message sent by an access network device, determining a measurement cycle according to measurement cycle related information, performing neighbor cell measurement within the measurement cycle to obtain a measurement report about quality of neighbor cell signals, sending the measurement report to the access network device, and after receiving a handover command sent by the access network device, performing, by the dedicated network user equipment, handover according to the handover command. With the technical solutions provided in the embodiments of the present invention, a measurement cycle can be adjusted and controlled, and a handover delay can meet the communication requirement in a dedicated network scenario.

## Description

This application claims priority to Chinese Patent Application No. 201010273370.4, filed with the Chinese Patent Office on September 3, 2010 and entitled "HANDOVER METHOD, DEDICATED NETWORK USER EQUIPMENT, ACCESS NETWORK DEVICE, AND SYSTEM", which is incorporated herein by reference in its entirety.

### FIELD OF THE INVENTION

The present invention relates to the field of communication technologies, and in particular, to a handover method, a dedicated network user equipment, an access network device, and a system.

### BACKGROUND OF THE INVENTION

With the development of wireless communication technologies, users are posing higher requirements for wireless services. To meet the requirements for higher transmission rate, shorter delay, and wider frequency band, next generation network NGN (Next Generation Network), such as the LTE (Long Term Evolution, long term evolution), technology has been developed.

What defined in the standard and protocols of LTE are mainly directed to common user equipments and general purpose telecommunications network, where requirements for the performance index are all directed to common users. Some special application scenarios, however, involves specific dedicated networks. Such special application scenarios include, but are not limited to, the transportation field, especially high-speed transportation such as railway, express highway, subway, and high-speed railway. For example, in a railway or high-speed railway scenario, LTE user equipments are deployed on carriages and LTE base stations are deployed along the railways. An LTE base station provides access services for only dedicated user equipments on a train. The entire network is a dedicated network for railway communications.

During the research and practicing of the prior art, the inventor of the present invention finds that handover procedures defined in the current LTE standards and protocols are hard to meet the requirement of a dedicated network, thereby affecting user experience.

It should be noted that the above only describes the problem in the prior art exemplarily by using an LTE system as an example. Actually, in other modes of communication systems, similar problems need to be solved.

### SUMMARY OF THE INVENTION

Embodiments of the present invention provide a handover method, a dedicated network user equipment, an access network device, and a system, so that a measurement cycle can be adjusted and controlled and a handover delay meets the communication requirement in a dedicated network scenario.

A handover method includes:
receiving, by a dedicated network user equipment, a measurement control message sent by an access network device, where the measurement control message carries measurement cycle related information used to instruct the dedicated network user equipment to determine a measurement cycle of neighbor cell measurement;
determining, by the dedicated network user equipment, the measurement cycle according to the received measurement cycle related information;
performing, by the dedicated network user equipment, neighbor cell measurement in the determined measurement cycle and obtaining a measurement report about quality of neighbor cell signals;
sending, by the dedicated network user equipment, the measurement report to the access network device, where the measurement report is a basis for the access network device to make handover determination;
receiving, by the dedicated network user equipment, a handover command sent by the access network device, where the handover command is a result of handover determination performed by the access network device; and
performing, by the dedicated network user equipment, handover according to the handover command.

A handover method includes:
sending, by an access network device, a measurement control message to a dedicated network user equipment, where the measurement control message carries measurement cycle related information used to instruct the dedicated network user equipment to determine a measurement cycle of neighbor cell measurement;
receiving a measurement report which is about the quality of neighbor cell signals and is sent by the dedicated network user equipment, where the measurement report is a result of measurement performed by the dedicated network user equipment in the determined measurement cycle;
making handover determination according to the received measurement report; and
sending a handover command to the dedicated network user equipment when a result of the determination is yes, where the handover command instructs the dedicated network user equipment to perform handover.

A dedicated network user equipment includes:
a measurement control message receiving module, configured to receive a measurement control message sent by an access network device, where the measurement control message carries measurement cycle related information used to instruct the dedicated network user equipment to determine a measurement cycle of neighbor cell measurement;
a measurement cycle determining module, configured to determine a measurement cycle according to the received measurement cycle related information;
a measurement report obtaining module, configured to perform neighbor cell measurement in the determined measurement cycle and obtain a measurement report about the quality of neighbor cell signals;
a sending module, configured to send the measurement report obtained by the measurement report obtaining module to the access network device, where the measurement report is a basis for the access network device to make handover determination;
a handover command receiving module, configured to receive a handover command sent by the access network device, where the handover command is a result of handover determination performed by the access network device; and
a handover module, configured to perform handover according to the handover command received by the handover command receiving module.

An access network device includes:
a measurement control message sending module, configured to send a measurement control message to a dedicated network user equipment, where the measurement control message carries measurement cycle related information used to instruct the dedicated network user equipment to determine a measurement cycle of neighbor cell measurement;
a receiving module, configured to receive a measurement report which is about quality of neighbor cell signals and is sent by the dedicated network user equipment, where the measurement report is a result of measurement performed by the dedicated network user equipment in the determined measurement cycle;
a handover determining module, configured to make handover determination according to the measurement report; and
a handover command sending module, configured to send a handover command to the dedicated network user equipment when a result of the determination performed by the handover determining module is yes, where the handover command instructs the dedicated network user equipment to perform handover.

A handover system includes the above dedicated network user equipment and access network device.

In the technical solutions provided in the embodiments of the present invention, the cycle for the dedicated network user equipment to measure quality of neighbor cell signals is controlled by using a measurement control message so that the handover time of the dedicated network user equipment is controlled, a measurement cycle can be adjusted and controlled, and a handover delay meets the communication requirement of dedicated network scenarios.

### BRIEF DESCRIPTION OF THE DRAWINGS

FIG. 1 is a schematic flowchart of a handover method according to an embodiment of the present invention;
FIG. 2 is a schematic flowchart of a handover method according to an embodiment of the present invention;
FIG. 3 is a schematic flowchart of a handover method according to an embodiment of the present invention;
FIG. 4 is a schematic diagram of a logical structure of a dedicated network user equipment according to an embodiment of the present invention;
FIG. 5 is a schematic diagram of a logical structure of an access network device according to an embodiment of the present invention; and
FIG. 6 is a schematic diagram of a logical structure of a handover system according to an embodiment of the present invention.

### DETAILED DESCRIPTION OF THE EMBODIMENTS

Embodiments of the present invention provide a handover method and correspondingly provide a dedicated network user equipment, an access network device, and a handover system. Detailed description is given as follows.

When an LTE network is used for high-speed railway communications, because of different application scenarios, as compared with a common telecommunications scenario, in a transportation scenario, some restrictions may be added and some restrictions are excluded.

For example, in a railway or high-speed railway scenario, LTE user equipments are deployed on carriages and LTE base stations are deployed along the railways. An LTE base station only provides access services to dedicated user equipments on a train. The entire network is a dedicated network for railway communications.

Generally, user equipments and network devices are provided by the same manufacturer. When the moving direction of a user equipment is fixed, a next neighbor cell involved in handover of the user equipment is also fixed. A dedicated network scenario also has high requirements on a handover delay. In such a scenario, the margin for optimization of the handover delay provided by the standards and protocols is very limited. Therefore, consideration may be made to small modifications in standards and protocols only to optimize an access delay. Because the network is closed, it is only required to achieve consistency between the user equipment and the network.

The protocol layers for an LTE user equipment include: a non access stratus (NAS, Non Access Stratum) layer, a radio resource control (RRC, Radio Resource Control) protocol layer, a packet data convergence protocol (PDCP, Packet Data Convergence Protocol) layer, radio link control (RLC, Radio Link Control), a media access control (MAC, Media Access Control) layer, and a physical (PHY, Physical) layer.

A high-speed railway scenario generally has the following characteristics:
1) A vehicle-mounted user equipment is a type of LTE UE. From the LTE UE to an eNodeB is an air interface backhaul system from a train to the ground. The LTE UE may be referred to as a dedicated network user equipment.
2) In this system, an LTE network is a dedicated network, where each cell serves a small number of UEs.
3) Along a rail, so long as the moving direction of a user equipment is fixed, cells involved in handover in its moving route are fixed.
4) The system has a very high requirement on a handover delay. The shorter the handover delay, the better.

Therefore, in a transportation field, how to implement fast handover and reduce the delay to meet the requirement of transportation communications is a technical problem to be solved.

During the research and practice of the prior art, the inventor of the present invention finds that: the speeds of high-speed trains are becoming higher and higher, up to 450 km per hour, which requires a shorter handover delay; the handover delay in an existing protocol is fixedly 200 ms, which fails to well meet the requirement for faster handover and affects user experience.

The network in the embodiments of the present invention may be a dedicated network in a high-speed moving scenario. The dedicated network user equipment and the access network device at a network side are configured in advance by an equipment manufacturer or an operator.

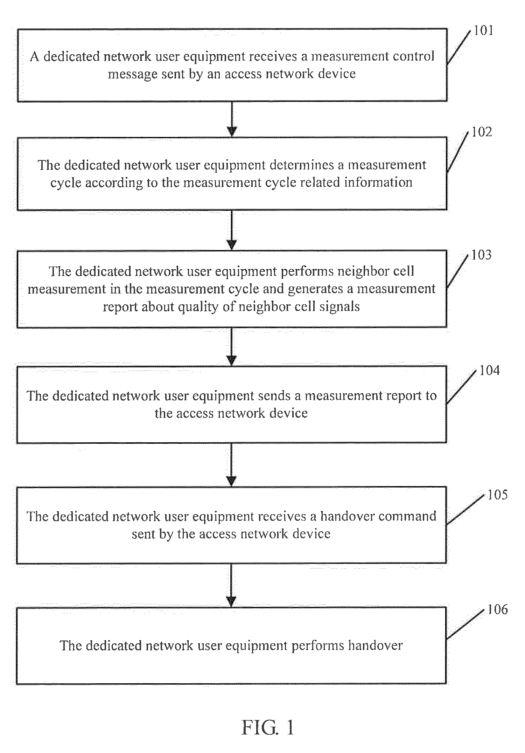

As shown in FIG. 1, a handover method in a first embodiment of the present invention specifically includes:
101. A dedicated network user equipment receives a measurement control message sent by an access network device.

The dedicated network user equipment receives a measurement control message sent by the access network device, where the measurement control message carries measurement cycle related information of the dedicated network user equipment to the access network device, where the measurement cycle related information is used to instruct the dedicated network user equipment to determine a measurement cycle of neighbor cell measurement.

The measurement cycle related information may be a specific numeric value or an index value of the measurement cycle, where the specific numeric value or index value of the measurement cycle is determined by the access network device.

Or, the measurement cycle related information may be information for instructing the dedicated network user equipment to dynamically select a measurement cycle.
102. The dedicated network user equipment determines a measurement cycle according to the measurement cycle related information.

If the measurement cycle related information is a specific numeric value, the measurement cycle can be determined according to the numeric value. That is, the measurement cycle is equal to the specific numeric value. For example:

Static configuration is performed according to the average per-hour speed of a high-speed train. For example, when the speed of the high-speed train is 450 km per hour, a handover delay needs to be decreased by 100 ms; however, a current handover delay is 200 ms, so the dedicated network user equipment sets the measurement cycle of neighbor cell measurement to 40 ms, and the cycle of 40 ms is directly carried in the measurement control message.

If the measurement cycle related information is an index value, the cycle is obtained according to a preset rule. For example:
The measurement control message sent by the access network device may be identified by using reserved bits in the mobility control information element of control signaling and is sent by the access network device to the dedicated network user equipment together with the control signaling. Specifically, two of the reserved bits in the mobility control information element of the control signaling are used. The measurement cycle may be configured to: 40 ms, 80 ms, 120 ms, and 200 ms, and may be represented by two bits as follows: 00 for 40 ms, 01 for 80 ms, 10 for 120 ms, and 11 for 200 ms.

If the measurement cycle related information is information for instructing the dedicated network user equipment to dynamically select a measurement cycle, when the dedicated network user equipment receives the instruction information, the dedicated network user equipment obtains a corresponding measurement cycle according to its own moving speed. For example:
The dedicated network user equipment receives the measurement control message sent by the access network device, where the message carries measurement cycle related information. The measurement cycle related information is the information for instructing the dedicated network user equipment to dynamically select a measurement cycle. It may be identified by using reserved bits in the mobility control information element of the control signaling and is sent by the access network device to the dedicated network user equipment. Specifically, one of the reserved bits in the mobility control information element of the control signaling may be used to carry the information, to control whether the dedicated network user equipment dynamically determines the measurement cycle of neighbor cell measurement. For example, one bit may be represented as: 1 for dynamic obtaining and 0 for static configuration. After the dedicated network user equipment receives the measurement control message, if the message carries 1, the dedicated network user equipment obtains a current moving speed from the operating system of a transportation vehicle (which is both the moving speed of the transportation vehicle such as high-speed train and the moving speed of the dedicated network user equipment), and obtains a corresponding cycle according to the moving speed from a locally stored mapping table between moving speeds and measurement report cycles as shown in Table 1.

**Table 1**

| Speed (km/h) | Cycle (ms) |
|---|---|
| 0-80 | 200 |
| 80-120 | 160 |
| 120-200 | 120 |
| 200-350 | 80 |
| Above 350 | 40 |

For example, when the moving speed obtained by the dedicated network user equipment is 300 km per hour, it is determined that the corresponding measurement cycle is 80 ms and the dedicated network user equipment sends a measurement report every 80 ms.

The measurement cycle related message sent by the access network device may also be a newly configured message as long as the access network device at the network side and the dedicated network user equipment are in agreement with each other and can recognize and process the newly configured message.
103. The dedicated network user equipment performs neighbor cell measurement within the measurement cycle and generates a measurement report about the quality of neighbor cell signals.

This step may specifically include: the RRC layer of the dedicated network user equipment sends a measurement control interface message to the PHY layer of the dedicated network user equipment after obtaining the measurement cycle, where the measurement control interface message carries the measurement cycle; after receiving the control interface message that is sent by the RRC layer and carries the measurement cycle, and in each measurement cycle, the PHY layer measures quality of neighbor cell signals and generates a measurement report, and sends the measurement report to the RRC layer of the dedicated network user equipment.
104. The dedicated network user equipment sends the measurement report to the access network device.

This step may specifically include: after receiving the measurement report sent by the PHY layer of the dedicated network user equipment, the RRC layer of the dedicated network user equipment filtering the measurement report and sends the filtered measurement report to the access network device at the network side. The measurement report is the basis for the access network device to make handover determination and allows the access network device to timely determine whether the quality of neighbor cell signals meets a handover condition. If the quality meets the handover condition, the access network device determines to make handover and sends a handover command to the dedicated network user equipment.
105. The dedicated network user equipment receives the handover command sent by the access network device.

The access network device makes handover determination according to the measurement report sent by the dedicated network user equipment, if the determination is to perform handover, the access network device sends a handover command to the dedicated network user equipment and the dedicated network user equipment receives the handover command sent by the network side.
106. The dedicated network user equipment performs handover.

After receiving the handover command sent by the access network device, the dedicated network user equipment performs handover according to the handover command.

According to the technical solutions provided in the embodiment of the present invention, a measurement control message is used to instruct the dedicated network user equipment to determine a measurement cycle of neighbor measurement, which breaks the restriction of a current protocol, so that the measurement cycle cab be adjusted and controlled, a handover delay can meet the communication requirement in a dedicated network scenario and user experience is improved.

Further, the method for determining a measurement cycle is flexible. For example, the measurement cycle may be adjusted and controlled timely according to the moving speed of the dedicated network user equipment or may be configured statically, so as to satisfy specific requirements of different scenarios.

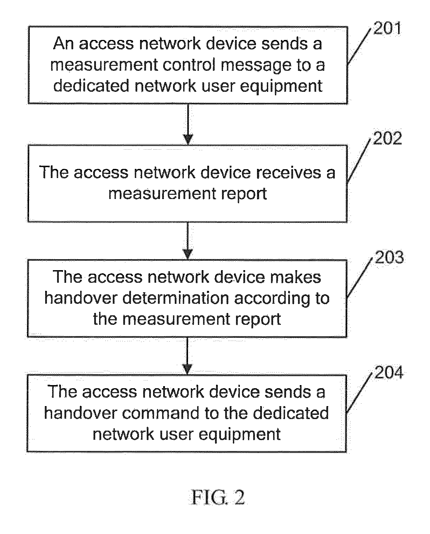

As shown in FIG. 2, a handover method in a second embodiment of the present invention includes:
201. An access network device sends a measurement control message to a dedicated network user equipment.

After obtaining the measurement cycle of neighbor cell measurement of the dedicated network user equipment, the access network device generates a measurement control message, where the measurement control message carries measurement cycle related information which is used to instruct the dedicated network user equipment to determine a measurement cycle of neighbor cell measurement.

The measurement cycle related information may be a specific numeric value or an index value of a measurement cycle, where the specific numeric value or index value of the measurement cycle is determined by the access network device.

If the measurement cycle related information is a numeric value, for example, the cycle is configured statically according to the average per-hour speed of a high-speed train. For example, when the speed of the high-speed train is 450 km per hour, a handover delay needs to be decreased by 100 ms; however, a current handover delay is 200 ms, so the measurement cycle of neighbor cell measurement of the dedicated network user equipment may be set to 40 ms and the cycle of 40 ms is directly carried in the measurement control message.

If the measurement cycle related information is an index value, for example, a measurement control message, the cycle may be identified by using reserved bits in the mobility control information element of control signaling and is sent by the access network device to the dedicated network user equipment together with the control signaling. Specifically, two of the reserved bits in the mobility control information element of the control signaling may be used and the measurement cycle may be configured to: 40 ms, 80 ms, 120 ms, and 200 ms, and may be represented by two bits as follows: 00 for 40 ms, 01 for 80 ms, 10 for 120 ms, and 11 for 200 ms.
201. The access network device receives a measurement report.

The access network device receives a measurement report which is about the quality of neighbor cell signals and is sent by the dedicated network user equipment, where the measurement report is a measurement result of measurement performed by the dedicated network user equipment within the measurement cycle.
203. The access network device makes handover determination according to the measurement report.

After receiving the measurement report sent by the dedicated network user equipment, the access network device determines, according to the measurement report, whether to hand over the dedicated network user equipment. If a handover condition is not met, it determines not to perform handover; if the handover condition is met, it determines to perform handover.
204. The access network device sends a handover command to the dedicated network user equipment.

After the access network device determines to hand over the dedicated network user equipment, the access network device sends a handover command to the dedicated network user equipment, so that the dedicated network user equipment executes a handover procedure.

Preferably, the measurement cycle related information may be information for instructing the dedicated network user equipment to dynamically select a measurement cycle. For example:
The measurement control message carries instruction information instructing the dedicated network user equipment to send a measurement report cycle dynamically to the access network device. It may be identified by using reserved bits in the mobility control information element of the control signaling and is sent by the access network device to the dedicated network user equipment together with the control signaling. Specifically, one of the reserved bits in the mobility control information element of the control signaling may be used to carry the information, to control the dedicated network user equipment to determine the measurement cycle of neighbor cell measurement. For example, one bit may be represented as: 1 for dynamic obtaining and 0 for static configuration. After the dedicated network user equipment receives the measurement control message, if the message carries 1, the dedicated network user equipment obtains a current moving speed from the operating system of a transportation vehicle (which is both the moving speed of the transportation vehicle such as high-speed train and the moving speed of the dedicated network user equipment), and obtains a corresponding cycle according to the moving speed from a locally stored mapping table between moving speeds and measurement report cycles as shown in Table 2.

**Table 2**

| Speed (km/h) | Cycle (ms) |
|---|---|
| 0-80 | 200 |
| 80-120 | 160 |
| 120-200 | 120 |
| 200-350 | 80 |
| Above 350 | 40 |

For example, when the moving speed obtained by the dedicated network user equipment is 300 km per hour, it is determined that the corresponding measurement cycle is 80 ms and the dedicated network user equipment sends a measurement report every 80 ms.

The access network device obtains the real-time moving speed of the dedicated network user equipment. Specifically, the speed may be measured by the access network device, or may be reported by the dedicated network user equipment.

That the access network device measures to obtain the moving speed of the dedicated network user equipment includes: the access network device obtains a downlink frequency offset, and according to the obtained frequency offset, calculates the frequency after offsetting, and then calculates the moving speed of the dedicated network user equipment.

Specifically, in a network of high-speed movement, the access network device (such as a base station) is fixed and the dedicated network user equipment mounted on a train moves with the train at a high speed. If the speed of the base station is u, the speed of the dedicated network user equipment is v1, a wave speed is v2, the frequency radiated from a wave source is f1, and the frequency after offsetting is f2, the v1 of the dedicated network user equipment can be calculated according to the equation: f2 = f1 x (1 + v1/v2)/(1 - u/v2).

Afterwards, the access network device obtains the corresponding measurement cycle locally according to the obtained moving speed.

According to the technical solutions provided in the embodiment of the present invention, a measurement control message is used to instruct the dedicated network user equipment to determine a measurement cycle of neighbor measurement, which breaks the restriction of a current protocol, so that a measurement cycle can be adjusted and controlled, a handover delay meets the communication requirement in a dedicated network scenario and user experience is improved.

Further, the method for determining a measurement cycle is flexible. For example, the measurement cycle may be adjusted and controlled timely according to the moving speed of the dedicated network user equipment or may be configured statically, so as to satisfy specific requirements of different scenarios.

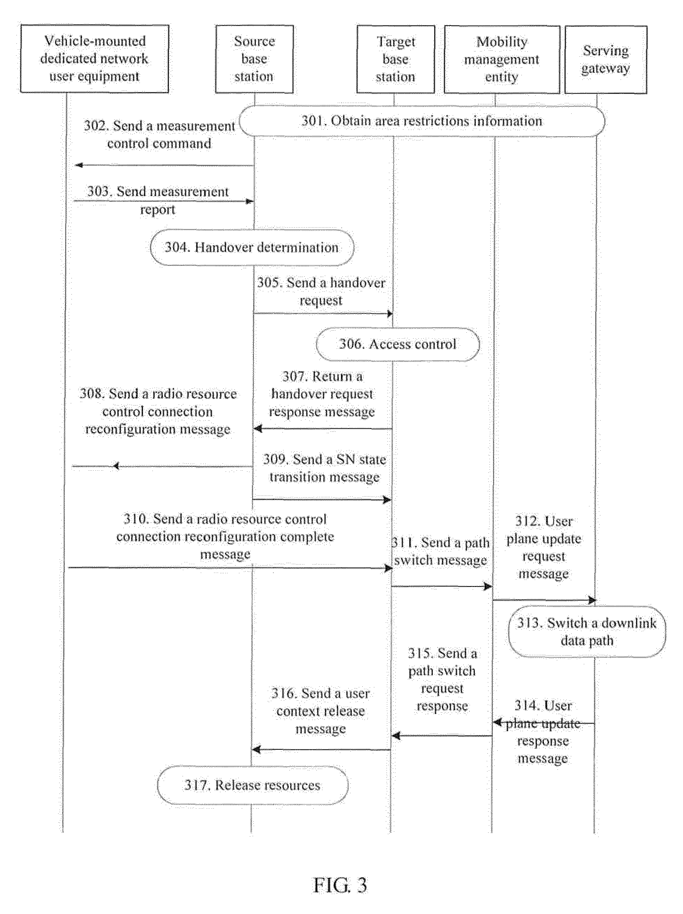

Referring to FIG. 3. FIG. 3 is a schematic flowchart of a handover method in a transportation scenario in a third embodiment of the present invention. The whole process of the handover method in the embodiment of the present invention is described in detail hereinafter with reference to FIG. 3. In the embodiment, there is a high-speed railway as an application scenario, and correspondingly, a dedicated network user equipment is a vehicle-mounted dedicated network user equipment.
Step 301: A source base station interacts with a serving gateway to obtain area restrictions information.

For example, the source base station obtains area restrictions information, such as area restrictions information, when setting up a link with the serving gateway or when updating the current timing advance TA, and adds the area restrictions information to a user context (UE context).
Step 302: The source base station initiates a user measurement procedure according to the area restrictions information and sends a measurement control command to the vehicle-mounted dedicated network user equipment.

The source base station sends the measurement control command to the vehicle-mounted dedicated network user equipment and adds information of a measurement cycle by using two of reserved bits in the mobility control information element of measurement control signaling, where the measurement cycle may be understood as a cycle for the vehicle-mounted dedicated network user equipment to perform neighbor cell measurement or understood as a cycle for the vehicle-mounted dedicated network user equipment to report a measurement report about quality of neighbor cell signals.

Assuming that the speed of a high-speed train is 450 km per hour in the scenario, a delay needs to be decreased by 100 ms, that is, the delay needs to be controlled to be within 100 ms, to ensure the quality of communication. Under such a specific requirement, two bits 01 may be used to represent a cycle of 80 ms.
Step 303: The vehicle-mounted dedicated network user equipment reports a measurement report to the source base station.

After the vehicle-mounted dedicated network user equipment receives the measurement control signaling that carries a cycle and is sent by a base station at a network side, the RRC layer of the dedicated network user equipment sends a measurement control interface message to the PHY layer of the dedicated network user equipment, where the measurement control interface message carries the cycle 01 carried in the measurement control signaling.

After receiving the control interface message that carries the cycle and is sent by the RRC layer of the dedicated network user equipment, the PHY layer of the dedicated network user equipment measures quality of neighbor cell signals every 80 ms, and sends a measurement report to the RRC layer of the dedicated network user equipment after the measurement is completed.

After receiving the measurement report sent by the PHY layer of the dedicated network user equipment, the RRC layer of the dedicated network user equipment filters the measurement report and sends the measurement report to the source base station at the network side.
Step 304: The source base station makes handover determination according to the measurement report sent by the vehicle-mounted dedicated network user equipment.
Step 305: The source base station sends a handover request to a target base station.

Because the time interval for the vehicle-mounted dedicated network user equipment to report a measurement report is shorter, after the source base station receives the measurement report, if a handover condition is met, the source base station determines to perform handover, the vehicle-mounted dedicated network user equipment can be handed over to the target base station in a shorter time. For example, if the measurement report reported by the vehicle-mounted dedicated network user equipment meets the handover condition, if quality of neighbor cell signals is measured every 200 ms, the source base station cannot send a handover request to the target base station to perform handover until at least 200 ms passes; if quality of neighbor cell signals is measured every 80 ms, the source base station may possibly send a handover request (HANDOVER Request) to the target base station to perform handover after 80 ms passes, so as to short the time of handover.
Step 306: The target base station performs access control.

After the target base station receives the handover request, if it is determined to perform handover, the target base station configures required resources.
Step 307: The target base station returns a handover response message to the source base station.

The target base station returns a handover response message to the source base station. After receiving the response to the handover request, the source base station forwards data.
Step 308: The source base station sends a radio resource control connection reconfiguration message to the vehicle-mounted dedicated network user equipment.

After receiving the handover response message sent by the target base station, the source base station sends a radio resource control connection reconfiguration message to the vehicle-mounted dedicated network user equipment, where the message carries the Preamble ID information of a target cell.

The vehicle-mounted dedicated network user equipment receives the radio resource control connection reconfiguration message, and executes handover according to the command of the source base station, to disconnect communication with the source base station and synchronize with the new cell. After executing the handover, the vehicle-mounted dedicated network user equipment sends a hybrid automatic retransmission/automatic retransmission response, such as HARQ/ARQ responses, to the source base station.

The source base station releases resources and transmits data to the target base station.
Step 309: The source base station sends an SN state transition message to the target base station.
Step 310: The vehicle-mounted dedicated network user equipment sends a radio resource control connection reconfiguration complete message to the target base station.

After the vehicle-mounted dedicated network user equipment is successfully connected to the target cell, the vehicle-mounted dedicated network user equipment sends a radio resource control connection reconfiguration complete message to the target base station.
Step 311: The target base station sends a path switch message to a mobility management entity.

The target base station sends a path switch message to the mobility management entity to notify that the vehicle-mounted dedicated network user equipment has completed cell handover.
Step 312: The mobility management entity sends a user plane update request message to a serving gateway.
Step 313: The serving gateway switches a downlink data path over to the target base station and sends one or more pieces of termination identifier data to the source base station in an original path, to release user plane resources connecting the source base station.
Step 314: The serving gateway sends a user plane update response message to the mobility management entity.
Step 315: The mobility management entity sends a path switch request response message to the target base station.
Step 316: The target base station sends a user context release message to the source base station.

After receiving the path switch response message sent by the mobility management entity, the target base station sends a user context release message to the source base station to notify the source base station that the handover succeeds and to trigger the source base station to release resources.
Step 317: The source base station releases resources.

After receiving the user context release message, the source base station releases radio resources and user context related C-plane control plane resources.

According to the technical solutions provided in the embodiment of the present invention, a measurement control message is used to instruct the dedicated network user equipment to determine a measurement cycle of neighbor measurement, which breaks the restriction of a current protocol, so that a measurement cycle can be adjusted and controlled, a handover delay meets the communication requirement in a dedicated network scenario and user experience is improved.

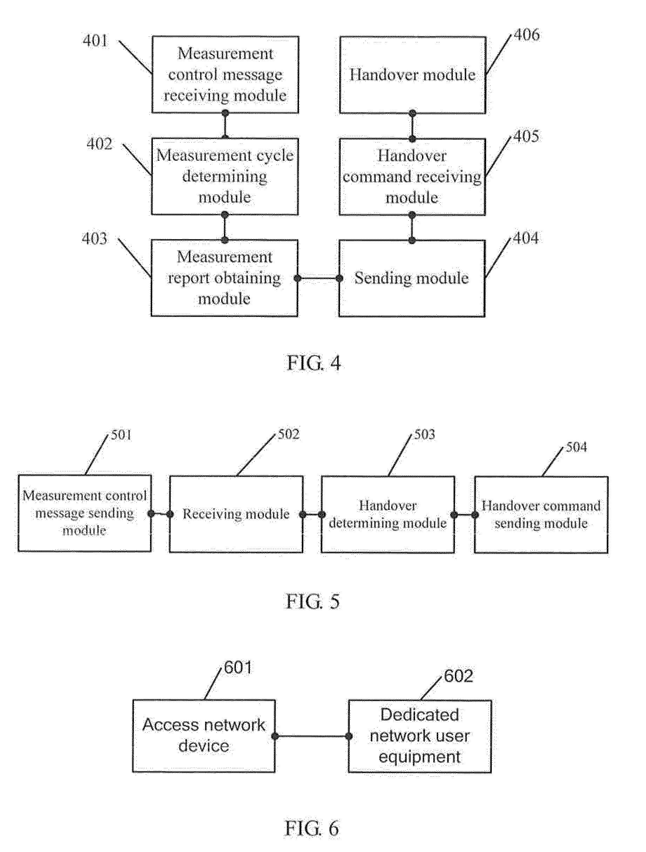

As shown in FIG. 4, a dedicated network user equipment in a fourth embodiment of the present invention includes:
a measurement control message receiving module 401, configured to receive a measurement control message sent by an access network device, where the measurement control message carries measurement cycle related information that is used to instruct the dedicated network user equipment to determine a measurement, cycle of neighbor cell measurement, where the measurement cycle related information may be a numeric value or an index value of a measurement cycle, where the numeric value or index value of the measurement cycle is determined by the access network device, or the measurement cycle related information may be information for instructing the dedicated network user equipment to dynamically select a measurement cycle;
a measurement, cycle determining module 402, configured to determine a measurement cycle according to the measurement cycle related information, where specifically, if the measurement cycle related information is a specific numeric value of the measurement cycle, the numeric value is the measurement cycle; if the measurement cycle related information is an index value, the dedicated network user equipment obtains, according to the index value, a corresponding measurement cycle from a locally pre-stored mapping table between moving speeds and measurement report cycles; if the measurement cycle related information is information for instructing the dedicated network user equipment to dynamically select a measurement cycle, the dedicated network user equipment first obtains a current moving speed (which is both the moving speed of a transportation vehicle such as a high-speed train and the moving speed of the dedicated network user equipment) and then obtains, according to the moving speed, a corresponding measurement cycle from a local mapping table between moving speeds and measurement report cycles;
a measurement report obtaining module 403, configured to perform neighbor cell measurement within the measurement cycle determined by the measurement cycle obtaining module 402, and obtain a measurement report about the quality of neighbor cell signals;
a sending module 404, configured to send the measurement report to the access network device, where the measurement report is a basis for the access network device to make handover determination, and the access network device may make a handover decision according to the measurement report and return a handover command;
a handover command receiving module 405, configured to receive the handover command sent by the access network device, where the handover command is a result of handover determination performed by the access network device; and
a handover module 406, configured to perform handover according to the handover command received by the handover command receiving module 405.

Optionally, the measurement cycle related information sent by the measurement control message receiving module 401 is a specific numeric value or an index value of a measurement cycle, and correspondingly, the measurement cycle determining module 402 is configured to use the specific value of the measurement cycle or a specific numeric value corresponding to the index value as the measurement, cycle.

In addition, optionally, the measurement cycle related information sent by the measurement control message receiving module 401 may be information for instructing the dedicated network user equipment to dynamically select a measurement cycle, and correspondingly, the dedicated network user equipment further includes:
A configuring module, configured to configure a mapping table between measurement cycles and moving speeds.

Correspondingly, the measurement cycle determining module 402 includes:
a moving speed obtaining unit, configured to obtain a moving speed of the dedicated network user equipment; and
a measurement cycle querying unit, configured to query the mapping table between measurement cycles and moving speeds to determine a measurement cycle, where the moving speed of the dedicated network user equipment is obtained by the dedicated network user equipment itself or is obtained through the access network device.

The measurement report obtaining module 403 may include:
a radio resource control protocol layer unit, configured to send a measurement control interface message to a physical layer unit, where the measurement control interface message carries the measurement cycle; and
a physical layer unit, configured to measure quality of neighbor cell signals within the measurement cycle and generate a measurement report.

According to the technical solutions provided in the embodiment of the present invention, a measurement control message is used to instruct the dedicated network user equipment to determine a measurement cycle of neighbor measurement, which breaks the restriction of a current protocol, so that a measurement cycle can be adjusted and controlled, a handover delay meets the communication requirement in a dedicated network scenario and user experience is improved.

Further, the method for determining a measurement cycle is flexible. For example, the measurement cycle may be adjusted and controlled timely according to the moving speed of the dedicated network user equipment or may be configured statically, so as to satisfy specific requirements in different scenarios.

As shown in FIG. 5, an access network device in a fifth embodiment of the present invention includes:
a measurement control message sending module 501, configured to send a measurement control message to a dedicated network user equipment, where the measurement control message carries measurement cycle related information that is used to instruct the dedicated network user equipment to determine a measurement cycle of neighbor cell measurement, so that in each measurement cycle, the dedicated network user equipment measures quality of neighbor cell signals once and sends a measurement report; where the measurement cycle related information may be a specific numeric value or an index value of the measurement cycle, where the specific numeric value or index value of the measurement cycle is determined by the access network device, or the measurement cycle related information may be information for instructing the dedicated network user equipment to dynamically select a measurement cycle;
a receiving module 502, configured to receive a measurement, report which is about the quality of neighbor cell signals and is sent by the dedicated network user equipment, where the measurement report is a measurement result of measurement, performed by the dedicated network user equipment within the measurement cycle;
a handover determining module 503, configured to make handover determination according to the measurement report received by the receiving module; and
a handover command sending module 504, configured to send a handover command to the dedicated network user equipment when a result of the determination performed by the handover determining module is yes, where the handover command instructs the dedicated network user equipment to perform handover.

When the measurement, control message sent by the measurement control message sending module 501 is a specific numeric value or an index value of the measurement cycle, the access network device correspondingly further includes:
an obtaining module, configured to determine the specific numeric value or index value of the measurement cycle according to an average or empirical moving speed of the dedicated network user equipment; or an access network device determines the specific numeric value or index value of the measurement cycle according to a requirement of an operator or a requirement of a current network; or determines the specific numeric value or index value of the measurement cycle according to the moving speed reported in real time by the dedicated network user equipment.

Optionally, the access network device may further include:
a module for obtaining the moving speed of the dedicated network user equipment, configured to obtain the moving speed of the dedicated network user equipment.

Specifically, the module for obtaining the moving speed of the dedicated network user equipment includes:
an obtaining unit, configured to obtain a downlink frequency offset; and a calculating unit, configured to calculate the moving speed of the dedicated network user equipment according to the downlink frequency offset obtained by the obtaining unit.

According to the technical solutions provided in the embodiment of the present invention, a measurement control message is used to instruct the dedicated network user equipment to determine a neighbor measurement cycle, which breaks the restriction of the current protocol, so that a measurement cycle can be adjusted and controlled, a handover delay meets the communication requirement in a dedicated network scenario, and user experience is improved.

Further, the method for determining a measurement cycle is flexible. For example, the measurement cycle may be adjusted and controlled timely according to the moving speed of the dedicated network user equipment, or may be configured statically, so as to satisfy specific requirements in different scenarios.

As shown in FIG. 6, a handover system in a fifth embodiment of the present invention includes an access network device 601 and a dedicated network user equipment 602. The access network device 601 may be an access network device described in the foregoing access network device and the dedicated network user equipment 602 may be a dedicated network user equipment described in the foregoing embodiment of the dedicated network user equipment. Details have been described in the foregoing embodiments and are not described here again.

It should be noted that the technical solutions provided in the embodiments of the present invention may be applicable to similar application scenarios in other communication systems in addition to an LTE system. Specific modes include, but are not limited to, wideband code division multiple access (Wideband Code Division Multiple Access, abbreviated as WCDMA), global system for mobile communications (Global System for Mobile Communications, abbreviated as GSM), code division multiple access (Code Division Multiple Access, abbreviated as CDMA), and worldwide interoperability for microwave access (Worldwide Interoperability for Microwave Access, abbreviated as WiMax).

In different communication systems, the access network device in the embodiments of the present invention is specifically: eNodeB in LTE and WiMax systems, base station subsystem (Base Station Subsystem, abbreviated as BSS) in GSM and CDMA systems, and radio network subsystem (Radio Network Subsystem, abbreviated as RNS) in a WCDMA system.

In addition, reference may be made between the description of method embodiments and the description of apparatus/system embodiments of the present invention. For example, the apparatus/system embodiments may have corresponding modules/units to implement the corresponding steps and processes in the method embodiments, or vice versa.

Persons of ordinary skill in the art understand that all or part of the steps of the methods in the embodiments may be implemented by a program instructing relevant hardware. The program may be stored in a computer readable storage medium, and the storage medium may be a read-only memory (ROM, Read Only Memory), a random access memory (RAM, Random Access Memory), a magnetic disk, or an optical disk.

The handover method, dedicated network user equipment, access network device, and system provided in the embodiments of the present invention are described in detail. Although the principle and implementation of the present invention are described through exemplary embodiments, the embodiments are described to help understanding the method and core idea of the present invention. It is apparent that those skilled in the art can make various modifications and variations to the implementation and applications scope of the present invention based on the idea of the present invention. In conclusion, the content of the specification shall not be construed as a limitation to the present invention.

## Claims

1. A handover method, comprising:
receiving, by a dedicated network user equipment, a measurement control message sent by an access network device, wherein the measurement control message carries measurement cycle related information, and the measurement cycle related information is used to instruct the dedicated network user equipment to determine a measurement cycle of neighbor cell measurement;
determining, by the dedicated network user equipment, the measurement cycle according to the measurement cycle related information;
performing, by the dedicated network user equipment, neighbor cell measurement within the measurement cycle to obtain a measurement report about quality of neighbor cell signals;
sending, by the dedicated network user equipment, the measurement report to the access network device, wherein the measurement report is a basis for the access network device to make handover determination;
receiving, by the dedicated network user equipment, a handover command sent by the access network device, wherein the handover command is a result of handover determination performed by the access network device; and
performing, by the dedicated network user equipment, handover according to the handover command.

2. The method according to claim 1, wherein: the measurement cycle related information is a specific numeric value or an index value of the measurement cycle, and the specific numeric value or index value of the measurement cycle is determined by the access network device; and
correspondingly, the determining, by the dedicated network user equipment, the measurement cycle according to the measurement cycle related information comprises:
using, by the dedicated network user equipment, the specific numeric value of the measurement, cycle or a specific numeric value corresponding to the index value as the measurement cycle.

3. The method according to claim 1, wherein: the measurement cycle related information is information for instructing the dedicated network user equipment to dynamically select the measurement cycle; and
correspondingly, the determining, by the dedicated network user equipment, the measurement cycle according to the measurement cycle related information comprises:
obtaining, by the dedicated network user equipment, its own moving speed, querying a mapping table between measurement cycles and moving speeds, and determining the measurement cycle, wherein the moving speed of the dedicated network user equipment is obtained by the dedicated network user equipment or is obtained through the access network device.

4. The method according to any one of claims 1 to 3, wherein the performing, by the dedicated network user equipment, the neighbor cell measurement within the measurement cycle to obtain the measurement report about the quality of neighbor cell signals comprises:
sending, by a radio resource control protocol layer of the dedicated network user equipment, a measurement control interface message to a physical layer of the dedicated network user equipment, wherein the measurement control interface message carries the measurement cycle; and
measuring, by the physical layer of the dedicated network user equipment, the quality of neighbor cell signals within the measurement cycle and generating the measurement report.

5. The method according to any one of claims 1 to 3, wherein the measurement, cycle related information is carried in reserved bits in a mobility control information element of the measurement control message.

6. A handover method, comprising:
sending, by an access network device, a measurement control message to a dedicated network user equipment, wherein the measurement control message carries measurement cycle related information, and the measurement cycle related information is used to instruct the dedicated network user equipment to determine a measurement cycle of neighbor cell measurement;
receiving, by the access network device, a measurement report which is about quality of neighbor cell signals and is sent by the dedicated network user equipment, wherein the measurement report is a measurement result of measurement performed by the dedicated network user equipment within the measurement, cycle;
making handover determination according to the measurement report; and
sending a handover command to the dedicated network user equipment when a result of the determination is yes, wherein the handover command instructs the dedicated network user equipment to perform handover.

7. The method according to claim 6, wherein the measurement cycle related information is a specific numeric value or an index value of the measurement cycle; and
the method further comprises:
determining, by the access network device, the specific numeric value or index value of the measurement cycle according to an average or empirical moving speed of the dedicated network user equipment; or
determining, by the access network device, the specific numeric value or index value of the measurement cycle according to a requirement of an operator or a requirement of a current network; or
determining, by the access network device, the specific numeric value or index value of the measurement cycle according to a moving speed reported in real time by the dedicated network user equipment.

8. The method according to claim 6, wherein the measurement cycle related information is information for instructing the dedicated network user equipment to dynamically select the measurement cycle.

9. The method according to any one of claims 6 to 8, wherein the access network device uses reserved bits in a mobility control information element of the measurement control message to carry the measurement cycle related information.

10. A dedicated network user equipment, comprising:
a measurement control message receiving module, configured to receive a measurement control message sent by an access network device, wherein the measurement control message carries measurement cycle related information, and the measurement cycle related information is used to instruct the dedicated network user equipment to determine a measurement cycle of neighbor cell measurement;
a measurement cycle determining module, configured to determine the measurement cycle according to the measurement cycle related information;
a measurement report obtaining module, configured to perform neighbor cell measurement within the measurement cycle and obtain a measurement report about quality of neighbor cell signals;
a sending module, configured to send the measurement report to the access network device, wherein the measurement report is a basis for the access network device to make handover determination;
a handover command receiving module, configured to receive a handover command sent by the access network device, wherein the handover command is a result of handover determination performed by the access network device; and
a handover module, configured to perform handover according to the handover command.

11. The equipment according to claim 10, wherein: the measurement cycle related information is a specific numeric value or an index value of the measurement cycle, and the specific numeric value or index value of the measurement cycle is determined by the access network device; and
correspondingly, the measurement cycle determining module is configured to use the specific numeric value of the measurement cycle or a specific value corresponding to the index value as the measurement cycle.

12. The equipment according to claim 10, wherein: the measurement cycle related information is information for instructing the dedicated network user equipment to dynamically select the measurement cycle;
the equipment further comprises a configuring module, configured to configure a mapping table between measurement cycles and moving speeds; and
correspondingly, the measurement cycle determining module comprises:
a moving speed obtaining unit, configured to obtain a moving speed of the dedicated network user equipment; and
a measurement cycle querying unit, configured to query the mapping table between measurement cycles and moving speeds to determine the measurement cycle.

13. The equipment according to any one of claims 10 to 12, wherein the measurement report obtaining module comprises:
a radio resource control protocol layer unit, configured to send a measurement control interface message to a physical layer unit of the dedicated network user equipment, wherein the measurement control interface message carries the measurement cycle; and
the physical layer unit, configured to measure the quality of neighbor cell signals within the measurement cycle and generate the measurement report.

14. An access network device, comprising:
a measurement control message sending module, configured to send a measurement control message to a dedicated network user equipment, wherein the measurement control message carries measurement cycle related information used to instruct the dedicated network user equipment to determine a measurement cycle of neighbor cell measurement;
a receiving module, configured to receive a measurement report which is about quality of neighbor cell signals and is sent by the dedicated network user equipment, wherein the measurement report is a measurement result of measurement performed by the dedicated network user equipment within the measurement cycle;
a handover determining module, configured to make handover determination according to the measurement report; and
a handover command sending module, configured to send a handover command to the dedicated network user equipment when a result of the determination performed by the handover determining module is yes, wherein the handover command instructs the dedicated network user equipment to perform handover.

15. The equipment according to claim 14, wherein the measurement cycle related information is a specific numeric value or an index value of the measurement cycle; and
the equipment further comprises an obtaining module, configured to:
determine the specific numeric value or index value of the measurement cycle according to an average or empirical moving speed of the dedicated network user equipment; or
determine the specific numeric value or index value of the measurement cycle according to a requirement of an operator or a requirement of a current network; or
determine the specific numeric value or index value of the measurement cycle according to a moving speed reported in real time by the dedicated network user equipment.

16. The equipment according to claim 14, wherein: the measurement cycle related information is information for instructing the dedicated network user equipment to dynamically select the measurement cycle.

17. A handover system, comprising the dedicated network user equipment of any one of claims 10 to 13 and the access network device of any one of claims 14 to 16.
